# EUROPEAN PATENT SPECIFICATION

(11) **EP 2 302 551 B1**
(45) Date of publication and mention of the grant of the patent: **25.02.2015**
(21) Application number: 10178615.0
(22) Date of filing: 23.09.2010
(51) Int. Cl.: G06F 21/75, G06F 21/77, G06Q 20/34, G06Q 20/38, G06Q 20/40, G07F 7/10

(54) **Method for protection of application on an IC card**
Verfahren zum Schützen von Anwendungen auf einer IC Karte
Procédé de protection d'applications pour la carte de circuit imprimé

(30) Priority: 25.09.2009 IT MI20091638
(43) Date of publication of application: 30.03.2011
(73) Proprietor: STMicroelectronics International N.V., 1118 BH, Luchthaven Schiphol (Amsterdam) (NL)
(72) Inventor: Di Stasio, Vitantonio, 81100, Caserta (IT); Di Iorio, Paolo, 81020, San Nicola La Strada (Caserta) (IT)
(74) Representative: Bosotti, Luciano

(56) References cited:
- WO-A1-2005/048203
- IT-A1- MI20 080 536

## Description

### Field of application

The present invention relates to a method for protecting an IC Card application programmed by an application developer, during a phase of pre-personalization of an IC Card which is executed by an IC Card manufacturer for storing the IC Card application in a memory of the IC Card, including the steps of:
- providing the IC Card application to the IC Card manufacturer;
- copying the IC Card application in a memory of a golden sample IC Card and installing the IC Card application in the memory of the golden sample IC Card, to provide an executable application;
- copying an image of the memory of the golden sample IC Card including the executable application into the memory of the IC Card.

The present invention further relates to a golden sample IC Card for protecting an IC Card application programmed by an application developer, including a memory wherein the IC Card application is copied and means for installing the IC Card application in the memory and providing an executable application.

Moreover, the present invention relates to an IC Card for protecting an IC Card application programmed by an application developer, comprising a memory wherein an image of a memory of a golden sample IC Card storing an executable application corresponding to the IC Card application is copied.

### Prior art

The present invention relates to a method to protect an IC Card application programmed by an application developer, during a phase of pre-personalization of an IC Card executed by an IC Card manufacturer for storing the IC Card application in a memory of the IC Card. According to a known method, the IC Card application is programmed by the application developer and it is delivered to the IC Card manufacturer to be installed inside the IC Card, during the pre-personalization phase.

The installation comprises a step of transforming the IC Card application in an executable application, including the linking of the executable application with libraries already stored in the IC Card, and the step of storing pre-personalization data, before delivering the IC Card to an IC Card issuer which is charged for a following personalization phase.

In order to reduce the time involved in the installation of a plurality of IC Cards, the IC Card manufacturer prepares a golden sample IC Card, including one or more executable applications provided by the application developer, links the executable applications with the libraries of the golden sample IC Card, and finally copies an image of the memory of the golden sample IC Card into a plurality of IC Cards to be pre-personalized and delivered to the IC Card issuer. In other words, the golden sample IC Card is an IC Card used as a template or model for pre-personalizing a plurality of IC Card.

This method is advantageous because the steps of installing the IC Card applications, linking the executable application with the libraries of the IC Card, and storing pre-personalization data, are executed only time for the golden sample IC Card, and the plurality of IC Cards to be pre-personalized and delivered to the IC Card issuer are prepared simply copying the image of the memory of the golden sample IC Card.

However, this method suffers for some limitations due to the fact that the IC Card applications are not secure from unauthorized copy and may be copied from the IC Card manufacturer, resulting in an economical damage for the application developer. Moreover, the executable application installed in the golden sample IC Card and copied into the IC Card to be pre-personalized may be reverse engineered to retrieve the IC Card application, i.e. the source code programmed by the application developer.

The above mentioned disadvantage is particularly manifest when the IC Card application implements a secure service, for example a bank application, a pay per view or a mobile TV application, since a copy of the IC Card application may render the security service completely unsafe.

Another method for protecting an IC Card application, intended to solve the above mentioned drawbacks, comprises the steps of providing the IC Card application to the IC Card manufacturer in encrypted form and copying the encrypted IC Card application in a memory of a plurality of IC Cards to be delivered to the IC Card issuer.

More particularly, before delivering the IC Card to the IC Card issuer, the IC Card manufacturer provide to decrypt the encrypted IC Card application with a secret key provided by the application developer, to install the IC Card application in the memory of each IC Cards to be pre-personalized and to link the corresponding executable application with libraries of the IC Cards.

Even if this method is advantageous because the IC Card manufacturer is not aware of the secure key and he cannot copy or reverse engineer the IC Card application, it suffers for other limitations due to the fact that too much time is required to pre-personalize a plurality of IC Cards with the IC Card manufacture, since the steps of decrypting, installing, and linking the applications with the libraries must be repeated a plurality of times, i.e. for each IC Card to be pre-personalized.

The technical problem at the base of the present invention is that of providing a method to protect an IC Card application provided by an application developer, during a phase of pre-personalization of an IC Card which is executed by an IC Card manufacturer for storing the IC Card application in a memory of the IC Card, the method avoiding unauthorized copy or reverse engineering of the IC Card application by the part of the IC Card manufacturer and, at the same time, reducing the time involved for the pre-personalization of a plurality of IC Cards with the Card manufacturer, overcoming the drawbacks and limitations that currently affects the prior art method.
WO 2005/048203 discloses protecting an IC card application programmed by an application developer, wherein the data is copied into cards from the reference card.

### Summary of invention

The solution idea at the base of the present invention is that of encrypting an IC Card application with a secret key unknown to an IC Card manufacturer and to store the secret key inside a plurality of IC Cards to be pre-personalized and inside a golden sample IC Card, wherein the encrypted IC Card application in decrypted, installed and linked only one time inside a memory of the golden sample IC Card, and an encrypted image of such memory is copied to the plurality of IC Cards to be pre-personalized.

The IC Card application cannot be reverse engineered because, once it has been programmed by the application developer, it is encrypted by the secure key provided by the application developer and it may be decrypted only through the secure key stored inside the golden sample IC Card and inside the IC Card to be pre-personalized.

More particularly, the secure key is stored by a chip manufacture inside a chip of the golden sample IC Card and a chip of the plurality of IC Cards to be pre-personalized, and it is unknown to the IC Card manufacturer.

According to this solution idea the technical problem at the base of the present invention is solved by a method to protect an IC Card application programmed by an application developer as defined by the subject matter of the independent claim 1.

The above mentioned technical problem is also solved by a golden sample IC Card for protecting an IC Card application programmed by an application developer as defined by the subject matter of the independent claim 8.

Further advantages and features of the method and the IC Card according to the present invention are defined by the dependent claims. The description given here below only for exemplificative purpose and without limiting the scope of protection of the present invention.

### Brief description of the drawings

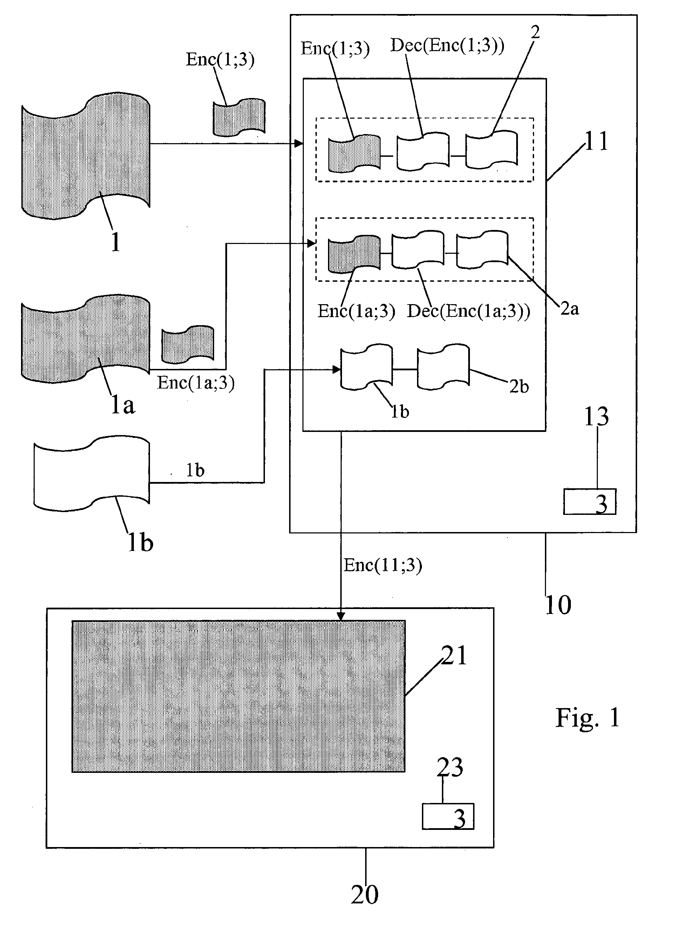

Figure 1 schematically represents the step of the method for protecting an IC Card application according to the present invention.

### Detailed description

With reference to figure 1, the steps of the method to protect an IC Card application 1 according to the present invention are schematically represented.

The IC Card application 1 is programmed by the application developer and it is delivered to an IC Card manufacturer to be installed inside an IC Card 20 during the pre-personalization phase. The installation comprises a step of transforming the IC Card application 1 in an executable application 2, including the linking of such executable application with libraries already stored in the IC Card 20, and the step of storing pre-personalization data, before delivering the IC Card 20 to an IC Card issuer which is charged of the personalization phase.

More particularly, the IC Card application 1 is copied in a memory 11 of a golden sample IC Card 10, i.e. in an IC Card used as a template or model for pre-personalizing a plurality of IC Card, it is installed in the golden sample IC Card, providing the executable application 2, which is linked with the libraries already stored in the memory 11. The step of installing the IC Card application 1 may be repeated to install inside the memory 11 of the golden sample IC Card 10 a plurality of IC Card application 1, 1a, 1b, provided by the application developer or by different application providers.

After that the IC Card applications 1, 1a, 1b are installed within the memory 11 of the golden sample IC Card 10 and the pre-personalization data are therein stored, the image of the memory 11 including the executable application 2, 2a, 2b is copied into the memory 21 of a plurality of IC Cards 20 to be pre-personalized.

According to the method of the present invention, the IC Card application 1 to be provided to the IC Card manufacturer is encrypted with a secret key 3 provided by the application developer and it is copied into the memory 11 of the golden sample 1C Card in encrypted form.

A phase of storing the secret key 3 in respective chips 13, 23 of the golden sample IC Card 10 and the IC Card 20 is provided, in order to enable the golden sample IC Card 10 and the IC Card 20 to execute decryption. More particularly, the secure key 3 is stored in the chips 13, 23 by a chip manufacturer and it is not known to the IC Card manufacturer.

The encrypted IC Card application copied into the memory 11 of golden sample IC Card is decrypted with the secure key 3 inside the golden sample IC Card itself and it is installed, linked with libraries of the golden sample IC Card are therein stored as an executable application 2.

More particularly, more than one IC Card application 1, 1a may be provided in encrypted form to the IC Card manufacturer, copied into the memory 11, decrypted with the secure key 3 and installed in corresponding executable application 2, 2a, as schematically represented in figure 1.

According to an aspect of the present invention, different application providers program respective IC Card application 1, 1a, transmit respective IC Card applications, encrypted with corresponding secure keys, to the IC Card manufacturer, and transmit the corresponding secure keys to the chip manufacturer which stores the corresponding secret keys inside the chip 13, 23 of the golden sample IC Cards 10 and the IC Cards 20.

Advantageously, each application developer may protect the IC Card application with a corresponding secure key, avoiding that the application is copied by the part of the IC Card manufacturer or by another application developer.

According to the present invention, the image of the memory 11 of the golden sample IC Card including the executable application 2 to be copied to the memory 21 of the plurality of IC Card 20, is encrypted with the secret key 3. The encrypted image of the memory 11 is decrypted with the secret key 3 of the chip 23 of the IC Card 20.

Advantageously, the step of decrypting the IC Card application 1 provided by the application developer, copying such application in the memory 11 and installing it, as well as the step of linking the corresponding executable application with libraries of the IC Cards 20, is executed only one time, in the golden sample IC Card 10, thus reducing the time involved in the pre-personalization of a plurality of IC Card, for which the image of the memory 11 in entirely copied.

Advantageously, the IC Card application cannot be copied from the memory 11 of the golden sample IC Card, since it is encrypted and the executable application stored in the golden sample IC Card 10 and in the IC Card 20 cannot be reverse engineered, since also the image memory 11 is encrypted with the secure key 3.

According to an aspect of the present invention, the method comprises a step of setting a secure status for the golden sample IC Card 10. More particularly, after the setting of the secure status, a read operation of the memory 11 of the golden sample IC Card 10 returns data encrypted with the secure key 3, i.e. it does not return the plain data.

Thus, when the executable application is installed in the memory 11, a read operation of the memory portion including the executable application 2 returns the executable application 2 in encrypted form. In this way, the IC Card manufactured cannot reverse engineer the encrypted executable application; however, the IC Card 10, wherein the encrypted image of the memory 11 including the executable application 2 is copied, decrypts such encrypted image of the memory 11 and retrieve the executable application 2.

Advantageously, before the setting of the secure status of the golden sample IC Card 10 a plurality of IC Card application 1b not requiring to be protected, may be transmitted in clear (not encrypted) to the memory 11 of the golden sample IC Card 10 and may be read from the memory 11. An IC Card application 1b not requiring to be protected is schematically represented and referred in figure 1 with reference 1b; the IC Card application 1b is transmitted to the golden sample IC Card in plain format, as represented by the non dotted square.

After the setting of the secure status in the golden sample IC Card 10, a read operation on the image of the memory 11 including the IC Card application 1b previously transmitted in clear, returns encrypted data. Thus, also the IC Card application 1b is encrypted after the setting of the secure status and may be read only through the secure key 3 of the golden sample IC Card 10.

The method further comprises the step of setting a secure status for the IC Card 20. Also in this case, after the setting of the secure status, a read operation on the memory 21 of the IC Card 10 returns data encrypted with the secret key 3. More particularly, read operations executed on the memory 21 before setting the secure status return data not encrypted while the read operations executed after this setting return data encrypted with the secure key.

The chip 13 and 23 are programmed in order to avoid an access to the secure key 3 by the part of the IC Card manufacturer. More particularly, an access to a memory portion of said chip 13 storing the secret key 3 of the golden sample IC Card 10, is enabled only to predetermined instructions of an operating system of the golden sample IC Card 10.

Also an access to a memory portion of the chip 23 storing the secret key 3 of the IC Card 20, is enabled only to predetermined instructions of an operating system of the IC Card 20.

More particularly, the secret key 3 of the golden sample IC Card 10 and the secret key 3 of the IC Card 20, as well as the predetermined instructions of the operative system of the golden sample IC Card 10 and the predetermined instructions of the operative system of the IC Card 20, are stored in the respective chips 13, 23 from a chip manufactured, which is different from the IC Card manufacturer. The secure key 3 is unknown to the IC Card manufacturer.

According to an aspect of the present invention, the IC Card application 1 is provided to the IC Card manufactured inside Application Protocol Data Units (APDUs). The payload of the APDUs comprises the IC Card application and is encrypted with the secure key 3. The APDUs are transmitted to the golden sample IC Card, wherein they are decrypted by the predetermined instructions of the operating system of the golden sample IC Card 10 to retrieve the IC Card application 1.

The present invention further relates to a golden sample IC Card 10 for protecting an IC Card application 1 programmed by an application developer, the golden sample IC Card including a memory 11 wherein the IC Card application 1 is copied, and means for installing the IC Card application 1 in the memory 11 and providing an executable application 2.

According to the present invention, a chip 13 of the golden sample IC Card 10 stores a secret key 3 provided by the application developer for decrypting the IC Card application 1, which is copied in encrypted form in the memory 11. More particularly, the encrypted IC Card application is included in the payload of a plurality of APDUs which are transmitted to the golden sample IC Card 10 and therein processed, to decrypt the application.

The golden sample IC Card 10 comprises security means which are set to enable predetermined instructions to access the secure key 3. Once the security means are enabled, the encrypted IC Card application is decrypted inside the memory 11, installed and liked with libraries of the golden sample IC Card, resulting in a corresponding executable application. The read operation executed on the image of the memory 11 including the executable application returns data encrypted with the secure key 3. Thus, the image of the memory 11 is copied to one or more IC Cards to be pre-personalized in encrypted form, since it is encrypted during the read operation.

The present invention further relates to an IC Card 20 to be pre-personalized copying the image of the content of the golden sample IC Card 10 above described. More particularly, the IC Card 20 comprises a memory 21 wherein an image of a memory 11 of the golden sample IC Card 10 storing an executable application 2 is copied.

The IC Card 20 comprises a chip 13 storing a secret key 3 for decrypting the image of the memory 11, which is copied in encrypted from in the memory 21.

More particularly, the IC Card 20 comprises security means which are set to encrypt data to be read from the memory 21 of the IC Card 20. Thus, when the security means are set, only data encrypted with the secure key 3 may be read from the memory 21 while encrypted data, including the encrypted image of the memory 11 of the golden sample IC Card, may be written inside such memory 21.

This method and the IC Cards according to the present invention are advantageous because the step of installing the IC Card application, the linking with its libraries and storing pre-personalization data, is executed only one time for the golden sample IC Card. Moreover, the plurality of IC Card to be pre-personalized and delivered to the IC Card issuer are prepared simply copying the image of the memory 11 of the golden sample IC Card 10, including the executable application 2 already linked.

Advantageously, before the setting of the secure status of the golden sample IC Card, a plurality of IC Card applications 20 not requiring to be protected, are transmitted in clear to the memory 11 of the golden sample IC Card 10 and may be read from such memory 11.

However, after the setting of the secure status for the golden sample IC Card, a read operation on the image memory including the IC Card application previously transmitted in clear, returns encrypted data.

Advantageously, according to the method and IC Cards of the present invention, the decryption of the IC Card application 20 provided by the application developer, the copy of such application in the memory 11 of the golden sample IC Card 10, and the installation of the IC Card application 20 as an executable application, is executed only one time, in the golden sample IC Card 10, while the image memory including the already installed IC Card application, i.e. the executable application, is entirely copied into the memory 21 of a plurality of IC Cards 20 to be pre-personalized.

Advantageously, the IC Card application 20 cannot be copied from the memory 11 of the golden sample IC Card, since it is encrypted with a secret key 3 unknown to the IC Card manufacturer, and the executable application 2 stored in the golden sample IC Card 10, as well as the encrypted image of the memory 11 stored in the IC Card 20, cannot be reverse engineered, since also the image memory 11 is encrypted with the secure key 3.

## Claims

1. Method to protect an IC Card application (1) programmed by an application developer, during a phase of pre-personalization of an IC Card (20) which is executed by an IC Card manufacturer for storing the IC Card application (1) in a memory (21) of said IC Card (20), including the steps of:
- providing the IC Card application (1) to the IC Card manufacturer;
- copying the IC Card application (1) in a memory (11) of a golden sample IC Card (10) and installing the IC Card application (1) in said memory (11), to provide an executable application (2);
- copying an image of the memory (11) including the executable application (2) into the memory (21) of said IC Card (20);
**characterized by** comprising the steps of:
- storing a secret key (3) provided by the application developer in respective chips (13, 23) of said golden sample IC Card (10) and said IC Card (20), wherein the secret key is inaccessible by the IC Card manufacturer;
- encrypting the IC Card application (1) to be provided to the IC Card manufacturer with the secret key (3);
- encrypting the image of the memory (11) to be copied from the golden sample IC Card (10) to the IC Card (20) with the secret key (3) stored in the golden sample IC Card (10);
wherein the encrypted IC Card application (1) and the encrypted image of the memory (11) are decrypted inside the golden sample IC Card (10) and inside the IC Card (20) with the secret key(3).

2. Method according to claim 1, **characterized by** comprising the step of setting a secure status for said golden sample IC Card (10) wherein read operations executed on the image of the memory (11) of the golden sample IC Card (10) returns said image encrypted with said secret key (3).

3. Method according to claim 1, **characterized by** comprising the step of setting a secure status for said IC Card (20) wherein read operations executed on the memory (21) of said IC, Card (10) returns data encrypted with said secret key (3).

4. Method according to claim 3, **characterized by** the fact that an access to a memory portion of said chip (13) storing the secret key (3) of said golden sample IC Card (10), is enabled only to predetermined instructions of an operating system of said golden sample IC Card (10) when the secure status of the golden sample IC Card (10) is enabled.

5. Method according to claim 4, **characterized by** the fact that an access to a memory portion of said chip (23) storing the secret key (3) of said IC Card (20), is enabled only to predetermined instructions of an operating system of said IC Card (20) when the secure status of the IC Card (20) is enabled.

6. Method according to claim 5, **characterized by** the fact that the secret key (3) of the golden sample IC Card (10) and the secret key of the IC Card (20), the predetermined instructions of the operative system of said golden sample IC Card (10) and the predetermined instructions of the operative system of the IC Card (20) are stored in said respective chips (13, 23) from an chip manufactured.

7. Method according to claim 1, **characterized by** the fact that the IC Card application (1) in provided to the IC Card manufactured in a payload of Application Protocol Data Units (APDUs), the payload being decrypted by said predetermined instructions of the operating system of the golden sample IC Card (10) while executing said step of copying.

8. Golden sample IC Card (10) for protecting an IC Card application (1) programmed by an application developer and used for pre-personalization of an IC card (20) by an IC Card manufacturer, including:
- a memory (11) wherein the IC Card application (1) is copied;
said golden sample IC card **characterized by**:
- a chip (13) storing a secret key (3) provided by the application developer for decrypting the IC Card application (1) wherein the secret key is inaccessible by the IC Card manufacturer and wherein the IC Card application is encrypted by the application developer before being provided to the IC Card manufacturer;
- means for decrypting the encrypted IC Card application (1) inside the golden sample IC Card (10) with the secret key (3);
- means for installing the IC Card application (1) in said memory (11) in order to provide an executable application;
- means for encrypting an image of the memory (11) including the executable application to be copied from the golden sample IC Card (10) to said IC card (20) with said secret key (3); and
- means for copying said IC Card application (1) in encrypted form in said memory (11) to said IC Card (20)..

## Patentansprüche

1. Verfahren zum Schutz einer durch einen Anwendungsprogrammierer programmierten IC-Karten-Anwendung (1) während einer Phase der Vorpersonalisierung einer IC-Karte (20), das durch einen IC-Karten-Hersteller zum Speichern der IC-Karten-Anwendung (1) in einem Speicher (21) der IC-Karte (20) ausgeführt wird, mit folgenden Schritten:
- Liefern der IC-Karten-Anwendung (1) an den IC-Karten-Hersteller;
- Kopieren der IC-Karten-Anwendung (1) in einen Speicher (11) einer goldenen Muster-IC-Karte (10) und Installieren der IC-Karten-Anwendung (1) in dem Speicher (11), um eine ausführbare Anwendung (2) zu erhalten;
- Kopieren eines Abbildes des Speichers (11) einschließlich der ausführbaren Anwendung (2) in den Speicher (21) der IC-Karte (20); **gekennzeichnet durch** folgende Schritte:
- Speichern eines **durch** den Anwendungsentwickler in entsprechenden Chips (13, 23) der goldenen Muster-IC-Karte (10) beziehungsweise der IC-Karte (20) gelieferten geheimen Schlüssels (3), wobei der Hersteller der IC-Karte nicht auf den geheimen Schlüssel zugreifen kann;
- Verschlüsseln der dem IC-Karten-Hersteller zu liefernden IC-Karten-Anwendung (1) mit dem geheimen Schlüssel (3);
- Verschlüsseln des von der goldenen Muster-IC-Karte (10) auf die IC-Karte (20) zu kopierenden Abbildes des Speichers (11) mit dem in der goldenen Muster-IC-Karte (10) gespeicherten geheimen Schlüssel (3), wobei die verschlüsselte IC-Karten-Anwendung (1) und das verschlüsselte Abbild des Speichers (11) innerhalb der goldenen Muster-IC-Karte (10) und innerhalb der IC-Karte (20) mittels des geheimen Schlüssels (3) entschlüsselt werden.

2. Verfahren nach Anspruch 1, **gekennzeichnet durch** den Schritt des Einstellens eines sicheren Zustandes für die goldene Muster-IC-Karte (10), worin auf dem Abbild des Speichers (11) der goldenen Muster-IC-Karte (10) ausgeführte Leseoperationen das mit dem geheimen Schlüssel (3) verschlüsselte Abbild zurückgeben.

3. Verfahren nach Anspruch 1, **gekennzeichnet durch** den Schritt des Einstellens eines sicheren Zustandes für die IC-Karte (20), wobei auf dem Speicher (21) der IC-Karte (10) ausgeführte Leseoperationen mit dem geheimen Schlüssel (3) verschlüsselte Daten zurückgeben.

4. Verfahren nach Anspruch 3, **gekennzeichnet durch** die Tatsache, dass ein Zugriff auf einen Speicherbereich auf dem Chip (13), der den geheimen Schlüssel (3) der goldenen Muster-IC-Karte (10) speichert, lediglich für vorbestimmte Instruktionen eines Betriebssystems auf der goldenen Muster-IC-Karte (10) freigegeben wird, wenn der sichere Zustand der goldenen Muster-IC-Karte (10) aktiviert ist.

5. Verfahren nach Anspruch 4, **gekennzeichnet durch** die Tatsache, dass ein Zugriff auf einen Speicherbereich des Chips (23), der den geheimen Schlüssel (3) der IC-Karte (20) speichert, nur für vorbestimmte Instruktionen eines Betriebssystems der IC-Karte (20) freigegeben wird, wenn der sichere Zustand der IC-Karte (20) aktiviert ist.

6. Verfahren nach Anspruch 5, **gekennzeichnet durch** die Tatsache, dass der geheime Schlüssel (3) der goldenen Muster-IC-Karte (10) und der geheime Schlüssel der IC-Karte (20), die vorbestimmten Instruktionen des Betriebssystems der goldenen Muster-IC-Karte (10) sowie die vorbestimmten Instruktionen des Betriebssystems der IC-Karte (20) in den entsprechenden Chips (13, 23) aus einem hergestellten Chip abgespeichert werden.

7. Verfahren nach Anspruch 1, **gekennzeichnet durch** die Tatsache, dass die IC-Karten-Anwendung (1) der hergestellten IC-Karte in der Nutzlast von Anwendungsprotokolldateneinheiten (APDUs) zugeliefert wird, wobei die Nutzlast durch die vorbestimmten Instruktionen des Betriebssystems der goldenen Muster-IC-Karte (10) während des Ausführung des Schrittes des Kopierens entschlüsselt wird.

8. Goldene Muster-IC-Karte (10) zum Schützen einer IC-Karten-Anwendung (1), die durch einen Anwendungsprogrammierer programmiert ist und zur Vorpersonalisierung einer IC-Karte (20) durch einen IC-Karten-Hersteller verwendet wird, mit:
- einem Speicher (11), in den die IC-Karten-Anwendung (1) kopiert wird;
wobei die goldene Muster-IC-Karte charakterisiert ist durch:
- einen einen geheimen Schlüssel (3) speichernden Chip (13), der durch den Anwendungsentwickler zum Entschlüsseln der IC-Karten-Anwendung (1) geliefert wird, wobei der IC-Karten-Hersteller nicht auf den geheimen Schlüssel zugreifen kann und wobei die IC-Karten-Anwendung durch den Anwendungsentwickler verschlüsselt wird, bevor sie dem IC-Karten-Hersteller geliefert wird;
- eine Einrichtung zum Entschlüsseln der verschlüsselten IC-Karten-Anwendung (1) mit dem geheimen Schlüssel (3) innerhalb der goldenen Muster-IC-Karte (10);
- eine Einrichtung zum Installieren der IC-Karten-Anwendung (1) in dem Speicher (11), um eine ausführbare Anwendung bereitzustellen;
- eine Einrichtung zum Verschlüsseln eines Abbildes des Speichers (11) einschließlich der von der goldenen Muster-IC-Karte (10) auf die IC-Karte (20) zu kopierenden ausführbaren Anwendungen mit dem geheimen Schlüssel (3); und
- eine Einrichtung zum Kopieren der IC-Karten-Anwendung (1) in verschlüsselter Form in den Speicher (11) auf die IC-Karte (20).

## Revendications

1. Procédé pour protéger une application pour carte à puce (1) programmée par un développeur d'application, pendant une phase de pré-personnalisation d'une carte à puce (20) qui est exécutée par un fabricant de cartes à puce pour mémoriser l'application pour carte à puce (1) dans une mémoire (21) de la carte à puce (20), comprenant les étapes suivantes :
- fournir l'application pour carte à puce (1) au fabricant de cartes à puce ;
- copier l'application pour carte à puce (1) dans une mémoire (11) d'une carte à puce échantillon de référence (10) et installer l'application pour carte à puce (1) se trouvant dans la mémoire (11), pour obtenir une application exécutable (2) ;
- copier une image de la mémoire (11) comprenant l'application exécutable (2) dans la mémoire (21) de la carte à puce (20) ;
**caractérisé en ce qu'**il comprend les étapes suivantes :
- mémoriser une clé secrète (3) fournie par le développeur d'application dans des puces respectives (13, 23) de la carte à puce échantillon de référence (10) et de la carte à puce (20), la clé secrète étant inaccessible pour le fabricant de cartes à puce ;
- chiffrer l'application pour carte à puce (1) à fournir au fabricant de cartes à puce à l'aide de la clé secrète (3) ;
- chiffrer l'image de la mémoire (11) à copier à partir de la carte à puce échantillon de référence (10) vers la carte à puce (20) à l'aide de la clé secrète (3) mémorisée dans la carte à puce échantillon de référence (10) ;
dans lequel l'application pour carte à puce chiffrée (1) et l'image chiffrée de la mémoire (11) sont déchiffrées à l'intérieur de la carte à puce échantillon de référence (10) et à l'intérieur de la carte à puce (20) à l'aide de la clé secrète (3).

2. Procédé selon la revendication 1, **caractérisé en ce qu'**il comprend l'étape consistant à mettre en place un statut sécurisé pour la carte à puce échantillon de référence (10), dans lequel des opérations de lecture exécutées sur l'image de la mémoire (11) de la carte à puce échantillon de référence (10) renvoient l'image chiffrée à l'aide de la clé secrète (3).

3. Procédé selon la revendication 1, **caractérisé en ce qu'**il comprend l'étape consistant à mettre en place un statut sécurisé pour la carte à puce (20) dans lequel des opérations de lecture exécutées sur la mémoire (21) de la carte à puce (10) renvoient des données chiffrées à l'aide de la clé secrète (3).

4. Procédé selon la revendication 3, **caractérisé en ce qu'**un accès à une portion de la mémoire de la puce (13) mémorisant la clé secrète (3) de la carte à puce échantillon de référence (10), est activé seulement pour des instructions prédéterminées d'un système d'exploitation de la carte à puce échantillon de référence (10) lorsque le statut sécurisé de la carte à puce échantillon de référence (10) est activé.

5. Procédé selon la revendication 4, **caractérisé en ce qu'**un accès à une portion de la mémoire de la puce (23) mémorisant la clé secrète (3) de la carte à puce (20), est activé seulement pour des instructions prédéterminées d'un système d'exploitation de la carte à puce (20) lorsque le statut sécurisé de la carte à puce (20) est activé.

6. Procédé selon la revendication 5, **caractérisé en ce que** la clé secrète (3) de la carte à puce échantillon de référence (10) et la clé secrète de la carte à puce (20), les instructions prédéterminées du système d'exploitation de la carte à puce échantillon de référence (10), et les instructions prédéterminées du système d'exploitation de la carte à puce (20) sont mémorisées dans lesdites puces respectives (13, 23) à partir d'une puce fabriquée.

7. Procédé selon la revendication 1, **caractérisé en ce que** l'application pour carte à puce (1) est fournie au fabricant de cartes à puce dans la charge utile d'Unités de Données de Protocole d'Application (APDU), la charge utile étant déchiffrée par lesdites instructions prédéterminées du système d'exploitation de la carte à puce échantillon de référence (10) pendant l'exécution de l'étape de copie.

8. Carte à puce échantillon de référence (10) pour protéger une application pour carte à puce (1) programmée par un développeur d'application et utilisée pour la pré-personnalisation d'une carte à puce (20) par un fabricant de cartes à puce, comprenant :
- une mémoire (11) dans laquelle est copiée l'application pour carte à puce (1) ;
la carte à puce échantillon de référence étant **caractérisée par** :
- une puce (13) mémorisant une clé secrète (3) fournie par le développeur d'application pour déchiffrer l'application pour carte à puce (1), la clé secrète étant inaccessible pour le fabricant de cartes à puce et l'application pour carte à puce étant chiffrée par le développeur d'application avant d'être fournie au fabricant de cartes à puce ;
- des moyens pour déchiffrer l'application chiffrée pour carte à puce (1) à l'intérieur de la carte à puce échantillon de référence (10) à l'aide de la clé secrète (3) ;
- des moyens pour installer l'application pour carte à puce (1) dans la mémoire (11) afin de fournir une application exécutable ;
- des moyens pour chiffrer une image de la mémoire (11) comprenant l'application exécutable à copier de la carte à puce échantillon de référence (10) vers la carte à puce (20) à l'aide de la clé secrète (3) ; et
- des moyens pour copier l'application pour carte à puce (1) sous forme chiffrée dans la mémoire (11), dans la carte à puce (20).
